# EUROPÄISCHE PATENTSCHRIFT

(11) **EP 2 325 391 B1**
(45) Veröffentlichungstag und Bekanntmachung des Hinweises auf die Patenterteilung: **20.03.2013**
(21) Anmeldenummer: 09014515.2
(22) Anmeldetag: 20.11.2009
(51) Int. Cl.: E01C 19/40, E01C 19/48, F16C 3/28

(54) **Tamper mit wählbarem Hub**
Tamper with variable stroke
Dispositif de bourrage à course variable

(43) Veröffentlichungstag der Anmeldung: 25.05.2011
(73) Patentinhaber: Joseph Vögele AG, 67067 Ludwigshafen (DE)
(72) Erfinder: Buschmann, Martin, Dipl.-Ing., 67435 Neustadt (DE); Munz, Roman, Dipl.-Ing., 67435 Neustadt (DE); Weiser, Ralf, 68526 Ladenburg (DE); Bertz, Klaus, 67596 Dittelsheim-Hessloch (DE)
(74) Vertreter: Grünecker, Kinkeldey, Stockmair & Schwanhäusser

(56) Entgegenhaltungen:
- EP-A1- 0 374 428
- WO-A1-00/55430
- DE-A1- 3 127 377
- DE-U1-202005 006 059
- GB-A- 742 141
- GB-A- 760 725

## Beschreibung

Die Erfindung betrifft einen Tamper gemäß Oberbegriff des Patentanspruchs 1.

Tamper ist ein üblicher Terminus für eine Einbaumaterial vorverdichtende Stampfervorrichtung und gehört zur Grundausstattung einer Einbaubohle eines Straßenfertigers. Die Einbaubohle weist eine Grundbohle, und, gegebenenfalls, zur Veränderung der Arbeitsbreite daran ausfahrbare Ausziehbohlen sowie gegebenenfalls bedarfsabhängig angebrachte BohlenVerbreiterungsteile auf. Jede dieser Komponenten der Einbaubohle weist zumindest einen Tamper mit einem eigenen Antriebsmotor, typisch einen drehzahlregelbaren Hydromotor, auf. Der Tamper wirkt zur Vorverdichtung in der Einbaubohle entweder allein, oder in Kombination mit einer Unwucht-Vibrationseinrichtung, die an dem Bohlenglättblech zur Vorverdichtung beitragende Unwuchtimpulse erzeugt.

Tamper, in Kombination mit oder ohne Unwucht-Vibratoren, sind beispielsweise aus der technischen Druckschrift "Für jede Aufgabe die richtige Einbaubohle", Nr. 2400/10/2.1997 der Firma Joseph Vögele AG, 68146 Mannheim / DE, Seiten 4, 8, 9, 11 bis 15, bekannt.

Um bei Änderung der Belagstärke, beispielsweise eingestellt an einem Außensteuerstand der Einbaubohle durch Verstellen der Höhenpositionen der Anlenkpunkte der Zugholme am Straßenfertiger, dennoch eine konstante Vorverdichtung zu erzielen, ist es bekannt, den Hub der Tamperleiste zur Anpassung an die Belagstärke zu ändern. Dies wird bei dem bekannten Tamper (Druckschrift: "Für jede Aufgabe die richtige Einbaubohle", Seite 2, links unten) dadurch vorgenommen, dass während einer Einbauunterbrechung die Exzenterbuchse in dem Pleuel relativ zum Exzenterabschnitt der Exzenterwelle verdreht und in einer anderen relativen Drehposition wieder drehfest an der Exzenterwelle fixiert wird. Dazu ist es erforderlich, bei jedem der mehreren vorgesehenen Pleuel wenigstens eine Spannschraube eines Spannringes zu lösen, z.B. die Exzenterwelle relativ zur Exzenterbuchse zu verdrehen, und den Spannring wieder zu fixieren. Abhängig von der relativen Drehposition zwischen den beiden Exzentrizitäten des Exzenterabschnittes der Exzenterwelle und der Exzenterbuchse ergibt sich dann eine Gesamtexzentrizität, die der Hälfte des wirksamen Tamperleistenhubes entspricht. Im Betrieb des Tampers ist der Spannring kraftschlüssig fixiert. Beispielsweise sind in der Grundbohle acht Pleuel vorgesehen, so dass acht Einstellvorgänge erforderlich sind. Weist die Einbaubohle auch Ausziehbohlen und/oder Bohlenverbreiterungsteile auf, werden noch mehr Einstellvorgänge auch an den dort angeordneten Tampern erforderlich. Dies ist zeitaufwändig und erfordert hohe Sorgfalt, um eine über die Arbeitsbreite gleichbleibende Vorverdichtung zu erzielen.

Grundsätzlich ist für eine geringe Belagstärke ein kleinerer Hub der Tamperleiste zweckmäßig, hingegen für große Belagstärken ein größerer Hub. Da die jeweils eingestellte Belagstärke unvermeidlich variieren kann oder absichtlich variiert werden muss, wäre es zweckmäßig, den für die eingestellte Belagstärke gewählten Hub der Tamperleiste zumindest in einem begrenzten Bereich schnell, präzise und ohne aufwändige manuelle Justierarbeiten ändern zu können.

Aus EP 0 374 428 A ist ein Tamper einer Einbaubohle eines Straßenfertigers gemäß dem Oberbegriff des Anspruchs 1 bekannt, bei welchem die Exzenterbuchse mittels eines Spannrings in der jeweiligen Anschlagposition auf dem Exzenterabschnitt fixiert wird. Nach Lösen des Spannrings mit einem Werkzeug lässt sich die Exzenterbuchse in eine neue Drehpositionierung relativ zum Exzenterabschnitt verdrehen, um den Tamperhub zu verändern, ehe der Spannring wieder auf dem Exzenterabschnitt fixiert wird.

Bei einem aus DE 31 27 377 A bekannten Tamper ist die Exzenterbuchse in ihrer Exzentrizität mittels Einstellschrauben veränderbar, nachdem Querschrauben eines Spannrings gelöst wurden.

GB 742 141 A und GB 760 725 A offenbaren jeweils einen Exzenter-Kurbelantrieb einer Kurbelpresse. Eine Exzenterbuchse mittels eines Spannrings ist auf der Exzenterwelle fixiert. Die Exzenterbuchse lässt sich noch nach Manipulationen mit einem Werkzeug in wenigstens eine andere, vorgegebene Drehposition umstellen.

DE 20 2005 006 059 U1 betrifft einen Anbauverdichter mit von einem drehrichtungsumkehrbaren Hydromotor drehangetriebenen Unwuchtelementen. Die Unwuchtelemente nehmen abhängig von der gewählten Drehrichtung unterschiedliche Relativstellungen zueinander ein, um die Erregerkraft für eine bodenseitige Verdichterplatte ändern zu können.

WO00/55430 A betrifft einen mit modulierter Multifrequenz-Vibration betriebenen Unwuchterzeuger zur Bodenbearbeitung. In diesem Verdichteraggregat wird durch Rotation mehrerer exzentrischer Massen oszillierend mit Zentrifugalkräften gearbeitet. Mehrere Kraftzellen sind mit jeweils einer Überträgermasse gekoppelt, die den Boden bearbeitet. Jede Zelle hat einen eigenen Antriebsmotor. Das an der Überträgermasse erzeugte Kraftvektordiagramm wird durch individuelle Steuerung der einzelnen Kraftzellen im Hinblick auf Drehfrequenz, Drehrichtung und Phasenposition der exzentrischen Massen variiert.

Der Erfindung liegt die Aufgabe zugrunde, einen Tamper der eingangs genannten Art anzugeben, der zumindest eine Hubänderung schnell, präzise und ohne manuelle Justierarbeiten ermöglicht.

Die gestellte Aufgabe wird mit den Merkmalen des Patentanspruchs 1 gelöst.

Als Antrieb der Exzenterwelle dient ein drehrichtungsumkehrbarer Hydro- oder Elektromotor oder ein Hydro- oder Elektromotor mit festgelegter Drehrichtung und einem Umschaltgetriebe zum Umkehren der Drehrichtung. Allein durch eine über den Antriebsmotor oder das Umkehrgetriebe vorgenommene Drehrichtungsumkehr der Exzenterwelle wird der eingestellte Hub der Tamperleiste innerhalb des begrenzten Vorauswahlbereiches ohne manuelle Justierarbeiten geändert, um eine rasche und präzise Anpassung an eine Änderung etwa der Belagstärke vorzunehmen. Durch die Drehrichtungsumkehr findet aufgrund des durch Massen- oder Verdichtungskräfte bedingten Drehwiderstands der Exzenterbuchse auf dem Exzenterabschnitt der Exzenterwelle eine relative Drehbewegung zwischen dem Mitnehmer und dem Vorauswahlbereich statt, durch welche der Mitnehmer aus einer Anschlagposition in die jeweils andere Anschlagposition des Vorauswahlbereiches gebracht wird. Dadurch ändert sich die relative Drehpositionierung zwischen der Exzenterbuchse und dem Exzenterabschnitt der Exzenterwelle, so dass sich eine neue Gesamtexzentrizität aus den beiden Einzelexzentrizitäten des Exzenterabschnittes der Exzenterwelle und der Exzenterbuchse einstellt, die der Hälfte eines neuen TamperleistenHubes entspricht. In der jeweils eingestellten Mitnehmer-Anschlagposition ist die Exzenterbuchse in der dann wirksamen Drehrichtung drehfest mit der Exzenterwelle gekuppelt. Zwischen den zwei unterschiedlichen Hüben der Tamperleiste ergibt sich eine vorbestimmte und z.B. durch das Bogenmaß des Vorauswahlbereiches und/oder die Umfangserstreckung des Mitnehmers wählbare Hubdifferenz. Dabei ist der Mitnehmer eine in eine Längsnut des Exzenter-abschnittes der Exzenterwelle eingesetzte Passfeder, die in den in der Exzenterbuchse als Ausnehmung mit zwei Endanschlägen geformten Vorauswahlbereich eingreift. Die Zusammenarbeit zwischen dem Mitnehmer und dem Vorauswahlbereich braucht im Übrigen nicht zwangsweise zwischen dem Exzenterabschnitt der Exzenterwelle und der Exzenterbuchse stattzufinden, sondern könnte auch von einer anderen Stelle der Exzenterwelle mit der Exzenterbuchse stattfinden. Die Lagen von Passfeder und Ausnehmung könnten getauscht werden. Abhängig von den Einbaubedingungen lässt sich die Hubänderung nur durch Drehrichtungsänderungen wahlweise zum Größeren wie zum Kleineren vornehmen. Wenn der jeweilige Mitnehmer an der Exzenterbuchse vorgesehen ist, befindet sich der funktionell zugeordnete Vorauswahlbereich an der Exzenterwelle. Eine umgekehrte Anordnung ist ebenfalls möglich und funktioniert gleich. Die Drehrichtungsumkehr kann bedienerseitig steuerbar sein, beispielsweise vom Führerstand des Straßenfertigers aus und/oder von einem Außensteuerstand an der Einbaubohle, oder wird automatisch bereits in Abhängigkeit von einer Änderung zumindest eines Einbauparameters wie der Belagstärke und/oder der Einbaugeschwindigkeit gesteuert, z.B. über die Steuervorrichtung des Stra-βenfertigers und unter Berücksichtigung der eingestellten Einbaugeschwindigkeit und/oder Belagstärke. Dies enthebt den Fahrzeugführer oder das Personal beim Außensteuerstand, permanent die erzielte Vorverdichtung visuell zu kontrollieren und/oder bei vorgenommenen Änderungen der Einbaugeschwindigkeit und/oder der Belagstärke die dann zweckmäßige Drehrichtungsumkehr einsteuern zu müssen. Die Drehrichtungsumkehr kann bei gleichbleibender Drehrichtung des Antriebsmotors auch mittels eines umschaltbaren Getriebes vorgenommen werden. Die Getriebe bzw. Antriebsmotoren für alle vorgesehenen Exzenterwellen sind zweckmäßig parallel geschaltet, so dass die Drehrichtungsumkehr bei allen Tampern mit einem einzigen Schaltvorgang vornehmbar ist.

Bei einer zweckmäßigen Ausführungsform ist der Vorauswahlbereich in oder an der Exzenterbuchse geformt, und ist der Mitnehmer in oder an der Exzenterwelle vorgesehen. Dies soll, wie erwähnt, nicht ausschließen, die Lagen von Vorauswahlbereich und Mitnehmer zu vertauschen.

Eine besonders zweckmäßige Ausführungsform zeichnet sich dadurch aus, dass der Vorauswahlbereich oder der Mitnehmer in Umfangsrichtung verstellbar ist. Diese Verstellung wird nicht durch eine Drehrichtungsumkehr vorgenommen, sondern kann manuell, wie bisher üblich, oder sogar mittels eines Verstellantriebes ferngesteuert durchgeführt werden. Eine derartige Verstellung in Umfangsrichtung ermöglicht es beispielsweise, zunächst zwei Tamperleisten-Hübe von beispielsweise 2,0 mm und 4,0 mm für geringe Belagstärken vorzuwählen, und zwischen diesen nur durch eine Drehrichtungsumkehr umzustellen, und mit einer z.B. manuellen Verstellung in Umfangsrichtung zwei größere Tamperleisten-Hübe von z.B. 4,0 mm und 8,0 mm für eine große Belagstärke vorzuwählen, zwischen denen dann später nur durch eine Drehrichtungsumkehr umgestellt werden kann. Dies bedeutet, dass gegebenenfalls die Vorwahl gesonderte Verstellvorgänge erfordert, die Umstellung zwischen den jeweils vorausgewählten zwei Hüben jedoch schnell und werkzeuglos nur durch je eine Drehrichtungsumkehr durchführbar ist.

Bei einer anderen zweckmäßigen Ausführungsform, die zu denselben Resultaten führt, kann der Mitnehmer in Umfangsrichtung relativ zum Pleuel zwischen unterschiedlichen Umfangspositionen umgesetzt werden. Das Umsetzen zur Vorwahl erfordert gegebenenfalls einen manuellen Eingriff, jedoch mit dem Vorteil, im jeweiligen Vorauswahlbereich allein durch Drehrichtungsumkehr zwei unterschiedliche Hübe einstellen zu können.

Bei einer weiteren, zweckmäßigen Ausführungsform sind in Umfangsrichtung mehrere Vorauswahlbereiche mit gleichen oder unterschiedlichen Umfangsabständen zwischen den jeweils zwei Mitnehmer-Anschlagpositionen vorgesehen, und ist der Mitnehmer zur Vorwahl wahlweise in einen jeden der Vorauswahlbereiche einbringbar. Auch hierbei sind zum Einbringen des Mitnehmers in den jeweils gewählten Vorauswahlbereich z.B. manuelle Verstellarbeiten erforderlich, mit dem Resultat, dann jeweils zwischen zwei unterschiedlichen Hüben allein durch Drehrichtungsumkehrungen der Exzenterwelle umschalten zu können. Dennoch sind mit nur z.B. einmaligem Verstellen vier Hübe rasch durch Drehrichtungsumkehr nutzbar.

Bei einer weiteren Ausführungsform können in Umfangsrichtung versetzt mehrere Mitnehmer mit gleichen oder unterschiedlichen Umfangsabmessungen vorgesehen sein, deren jeder zur Vorwahl wahlweise in den zumindest einen Vorauswahlbereich einbringbar ist. Unterschiedliche Umfangsabmessungen mehrerer Mitnehmer ermöglichen es, die Hubdifferenz zu verändern, die sich mit der Drehrichtungsumkehr zwischen den zwei vorbestimmten Mitnehmer-Anschlagpositionen ergibt. Dies kann beispielsweise für geringe Belagstärken zweckmäßig sein, die beim Einbauen schwächer variieren als eingestellte, große Belagstärken.

Bei einer zweckmäßigen Ausführungsform ist der Mitnehmer an einem auf der Exzenterwelle in Umfangsrichtung fixierbaren und verstellbaren Träger angeordnet. Vorzugsweise ist der Mitnehmer an oder in einem geschlitzten, mit wenigstens einer Spannschraube drehfest auf den Exzenterabschnitt oder die Exzenterwelle gespannten Spannring als Träger angeordnet, der sich nach Lösen der Spannschraube relativ zur Exzenterwelle bzw. relativ zum Pleuel verdrehen und in jeder gewünschten neuen Drehposition fixieren lässt. Dies ist eine bewährte Montageweise, wie sie bei Tampern bisher nur zum manuellen Einstellen eines bestimmten Hubes eingesetzt wird.

Bei dieser Ausführungsform kann die Exzenterbuchse mehrere in Umfangsrichtung versetzte, Vorauswahlbereiche definierende Ausnehmungen jeweils mit zwei Endanschlägen aufweisen. Die Umfangserstreckungen der mehreren Ausnehmungen, d.h. die Umfangsabstände zwischen den die Mitnehmer-Anschlagpositionen definierenden Endanschlägen bzw. die Hubdifferenzen, können untereinander gleich oder unterschiedlich sein. Unterschiedliche Umfangsabstände resultieren in unterschiedlichen Hubdifferenzen zwischen den jeweils zwei durch Drehrichtungsumkehrungen der Exzenterwelle einstellbaren Hüben.

Ausführungsformen des Erfindungsgegenstandes werden anhand der Zeichnungen erläutert. Es zeigen:
- Fig. 1: eine Ansicht eines Tampers einer Einbaubohle,
- Fig. 2: einen Schnitt in der Ebene II - II in Fig. 1, in gegenüber Fig. 1 vergrößertem Maßstab,
- Fig. 3: eine Draufsicht einer ersten Ausführungsform einer Hubverstelleinrichtung mit z.B. zwei Vorauswahlbereichen,
- Fig. 4: einen Querschnitt zu Fig. 3 in der Schnittebene IV - IV in Fig. 3,
- Fig. 5: einen Achsschnitt zu Fig. 3 und 4 in der Schnittebene V - V in Fig. 4,
- Fig. 6: einen Teilachsschnitt einer weiteren Ausführungsform,
- Fig. 7: einen Teilachsschnitt einer weiteren Ausführungsform,
- Fig. 8: einen Achsschnitt einer weiteren Ausführungsform,
- Fig. 9: einen Achsschnitt einer weiteren Ausführungsform,
- Fig. 10: einen Achsschnitt einer weiteren Ausführungsform, und
- Fig. 11: einen Achsschnitt einer weiteren Ausführungsform.

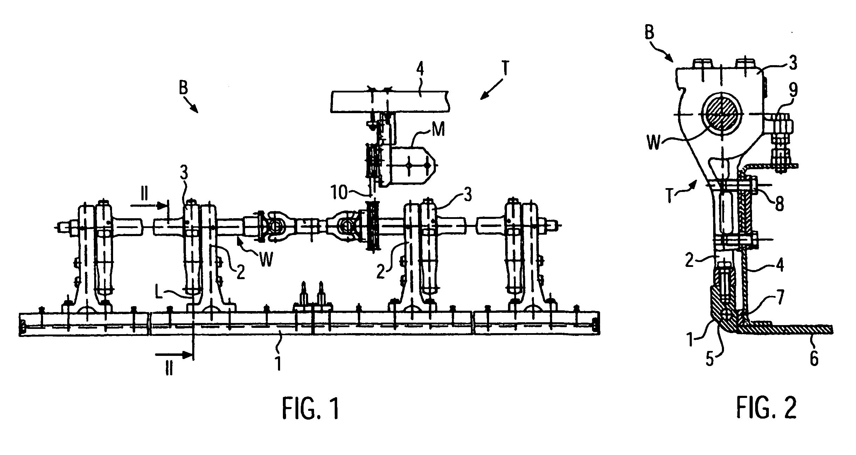

Die Fig. 1 und 2 zeigen schematisch einen Tamper T einer Einbaubohle B eines Straßenfertigers. Der Tamper T (Stampfervorrichtung) dient zur Vorverdichtung von Einbaumaterial beim Einbauen eines Belages aus bituminösem oder Beton-Einbaumaterial mit einer wählbaren Belagstärke, die beispielsweise an Zugpunkten von Zugholmen der Einbaubohle eingestellt wird, jedoch beim Einbau variieren kann oder variiert werden muss.

Der Tamper T weist eine das Einbaumaterial mit im Wesentlichen vertikalen Arbeitstakten zyklisch beaufschlagende Tamperleiste 1 auf, die entweder über die Komponente der Einbaubohle über die gesamte Breite durchgeht oder in einzelne Abschnitte unterteilt ist. Die Tamperleiste 1 ist an Pleueln 2 montiert, die durch die Rotation einer Exzenterwelle W die Arbeitstakte ableiten und auf die Tamperleiste 1 übertragen. Die Exzenterwelle W ist an einem Rahmen 4 der Einbaubohle B über Lagerböcke 3 stationär abgestützt, die mit Befestigungsschrauben 8 fixiert sind, und deren Höhenlage durch Justierschrauben 9 einstellbar ist, um beispielsweise den unteren Totpunkt jeder Tamperleiste 1 mit einem am Rahmen 4 unterseitig montierten Glättblech 6 auszurichten.

Wie anhand der nachfolgenden Figuren erläutert wird, weist die Exzenterwelle W im Bereich des jeweiligen Pleuels 2 einen Exzenterabschnitt auf, auf dem eine Exzenterbuchse drehfest angeordnet ist, die im Pleuel 2 drehbar gelagert ist. Die Exzenterwelle W wird in der gezeigten Ausführungsform in Fig. 1 über einen drehrichtungsumkehrbaren Antriebsmotor M (Hydromotor oder Elektromotor) und einen Riemen- oder Kettentrieb 10 angetrieben. Alternativ könnte ein in einer Drehrichtung laufender Antriebsmotor M vorgesehen sein, der die Exzenterwelle W über ein Umschaltgetriebe (nicht gezeigt) wahlweise in einer oder der anderen Drehrichtung antreibt. Der Antriebsmotor M (mit oder ohne Getriebe) ist am Rahmen 4 oder einem anderen Bestandteil der Einbaubohle montiert. Die Exzenterwelle W kann auch direkt vom Antriebsmotor M angetrieben werden.

In der Schnittdarstellung in Fig. 2 weist die Tamperleiste 1 einen Innenkanal 5 auf, der zum Einbringen beispielsweise eines Heizelementes dient. Die Tamperleiste 1 kann bei ihren vertikalen Arbeitstakten von einem Führungskörper 7 relativ zum Glättblech 6 geführt werden. In Fig. 2 ist durch strichpunktierte Linien bereits die Exzentrizität des in den Fig. 1 und 2 nicht gezeigten Exzenterabschnittes der Exzenterwelle W angedeutet.

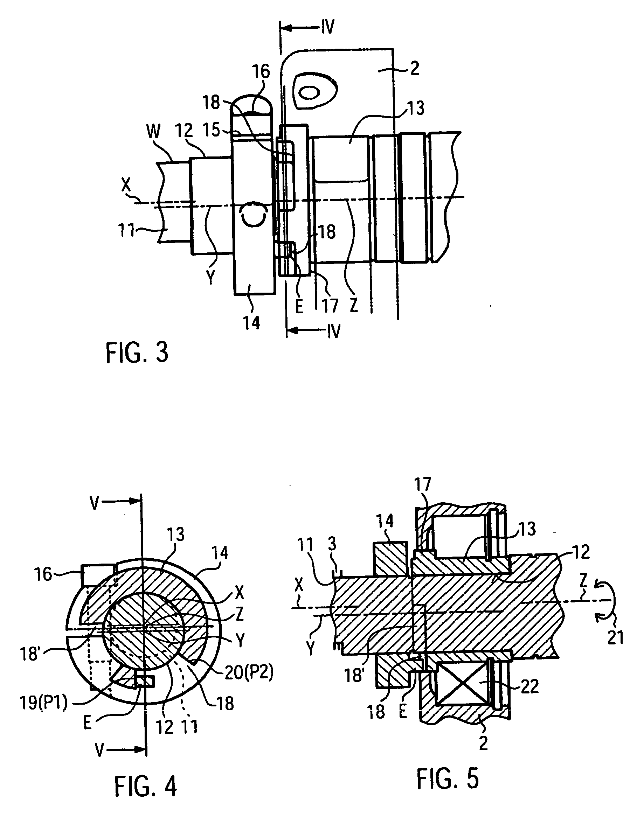

In dem Tamper T sind erfindungsgemäß zwischen der Exzenterwelle W und dem jeweiligen Pleuel 2 wenigsten ein Mitnehmer und wenigstens ein Vorauswahlbereich für zwei unterschiedliche Mitnehmer-Anschlagpositionen vorgesehen, die unterschiedlichen Hüben der Tamperleiste 1 zugeordnet sind. Dies soll zunächst anhand der Ausführungsform der Fig. 3, Fig. 4 und Fig. 5 erläutert werden.

In Fig. 3 weist die Exzenterwelle W einen zur Achse X konzentrischen Abschnitt 11 auf, der beispielsweise zur Drehlagerung der Exzenterwelle im Lagerbock 3 benutzt wird, und im Bereich des Pleuels 2 einen gegenüber dem Abschnitt 11 exzentrischen Exzenterabschnitt 12 mit einer Achse Y auf. Auf dem Exzenterabschnitt 12 ist im Bereich des Pleuels 2 eine Exzenterbuchse 13 angeordnet, die einen zylindrischen Innenumfang entsprechend dem Außenumfang des Exzenterabschnittes 12 und einen zylindrischen Außenumfang aufweist, dessen Achse Z gegenüber den Achsen X und Y exzentrisch ist.

In Fig. 4 ist das größtmögliche Maß des Hubs der Tamperleiste 1 angedeutet, da sich die Exzentrizitäten zwischen X und Y und Y und Z in derselben Radialebene (die Richtung der Arbeitstakte der Tamperleiste 1) summieren. Wird die Exzenterbuchse 13 relativ zum Exzenterabschnitt 12 und relativ zum Pleuel 2 um die Achse Y verdreht, dann verringert sich der Anteil ihrer Exzentrizität zwischen Y und Z, der am Pleuel 2 wirksam wird, d.h. der Hub der Tamperleiste 1 wird kürzer.

In Fig. 3 ist auf dem Exzenterabschnitt 12 ein Spannring 14 mittels wenigstens einer Spannschraube 16 drehfest fixiert, der einen radialen Schlitz 15 aufweist und einen Mitnehmer E trägt, der hier in Richtung zur Exzenterbuchse 13 axial vorspringt. Der Spannring 14 ist nach Lösen der Spannschraube 16 mit dem Mitnehmer E relativ zum Exzenterabschnitt 12 (oder der Exzenterwelle W) in Umfangsrichtung verdrehbar und durch Anziehen der Spannschraube 16 drehfest fixierbar. Der Mitnehmer E greift in Fig. 3 in einen Vorauswahlbereich 18 ein, der hier in einem Ringansatz 17 der Exzenterbuchse 13 in Form einer in Umfangsrichtung verlaufenden Ausnehmung ausgebildet ist, deren Umfangserstreckung größer ist als die Umfangserstreckung des Mitnehmers E. Als Option ist wenigstens ein weiterer Vorauswahlbereich 18' in Umfangsrichtung gegenüber dem Vorauswahlbereich 18 versetzt vorgesehen, in welchen der Mitnehmer E wahlweise einbringbar ist, beispielsweise indem der gelöste Spannring 14 in Fig. 3 nach links verschoben und dann verdreht und wieder nach rechts verschoben wird. Es ist denkbar, sogar noch mindestens einen weiteren Vorauswahlbereich (nicht gezeigt) vorzusehen. Bei mehreren Vorauswahlbereichen 18, 18' können diese gleiche oder unterschiedliche Umfangserstreckungen haben. Die Lagen von Mitnehmer E und Vorauswahlbereich 18, 18' können an der Exzenterwelle W und der Exzenterbuchse 13 getauscht sein.

Aus Fig. 4 ist zu entnehmen, dass der jeweilige Vorauswahlbereich 18 zwei Endanschläge 19, 20 bildet, die vorbestimmte Mitnehmer-Anschlagpositionen P1, P2 für den sich mit der Exzenterwelle W in der einen oder der anderen Drehrichtung drehenden Mitnehmer E definieren. Eine Umstellung zwischen den Positionen P1, P2 lässt sich allein durch eine Drehrichtungsumkehr der Exzenterwelle W vornehmen, weil der durch Reibungswiderstände und den Verdichtungswiderstand oder Massenkräfte bedingte Drehwiderstand der Exzenterbuchse 13 im Pleuel 2 den Mitnehmer E beispielsweise aus der Position P1 in die Position P2 zwingt, in der er in der dann gewählten Drehrichtung die Exzenterbuchse 13 drehfest mit der Exzenterwelle W kuppelt. Durch die mit der Drehrichtungsumkehr (Doppelpfeil 21 in Fig. 5) vorgenommene Änderung der relativen Drehposition zwischen der Exzenterbuchse 13 und der Exzenterwelle W wird der an der Tamperleiste 1 wirksame Hub verändert, z.B. von 4,0 mm auf 2,0 mm für geringe Belagstärken, oder von 8,0 mm auf 4,0 mm für größere Belagstärken.

Wenigstens ein weiterer Vorauswahlbereich 18', in Umfangsrichtung versetzt zu dem Vorauswahlbereich 18, kann zweckmäßig sein, wenn aufgrund eines größeren oder kleineren Umfangsabstandes zwischen den Endanschlägen 19, 20 eine kleinere oder größere Hubdifferenz zwischen den beiden durch eine Drehrichtungsumkehr einstellbaren Hüben gebraucht wird. Es könnte ausreichen, nur einen Vorauswahlbereich 18, wie in Fig. 5, vorzusehen, weil der Mitnehmer E mit dem Träger (dem Spannring 14) ohnedies in jede gewünschte relative Drehposition auf dem Exzenterabschnitt 12 der Exzenterwelle W verdreht werden kann, um eine Vorwahl vorzunehmen.

In den Fig. 3 bis 5 sind der jeweilige Vorauswahlbereich 18 bzw. 18' an der Exzenterbuchse 13 und der Mitnehmer E am Exzenterabschnitt 12 bzw. dem Spannring 14 vorgesehen. Die Lagen könnten auch vertauscht sein. Ferner wäre es denkbar, am Spannring 14 mehrere in Umfangsrichtung versetzte Mitnehmer E vorzusehen, die wahlweise in Eingriff in einen Vorauswahlbereich 18, 18' bringbar sind, und die gegebenenfalls untereinander unterschiedliche Abmessungen in Umfangsrichtung haben.

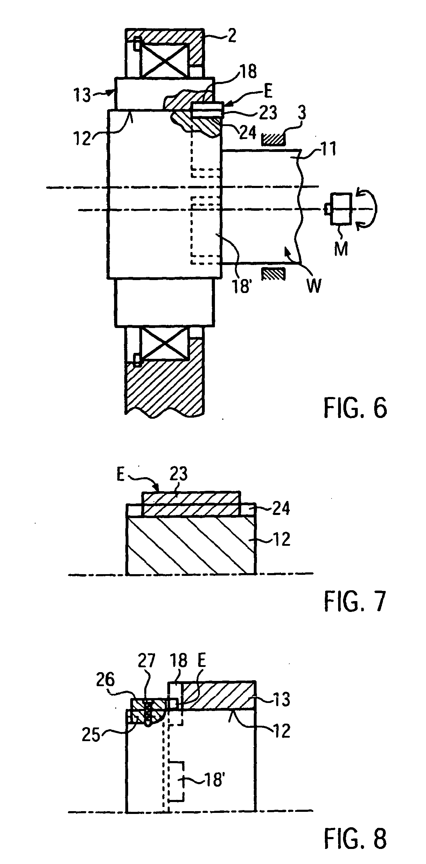

In der Ausführungsform in Fig. 6 ist der Mitnehmer E ein Bolzen oder eine Passfeder 23, die in eine Nut 24 im Exzenterabschnitt 12 eingesetzt ist, beispielsweise herausnehmbar, um zum Eingriff in den anderen Vorauswahlbereich 18' umgesetzt zu werden. Alternativ könnten im Exzenterabschnitt 12 in Umfangsrichtung verteilt mehrere Nuten 24 vorgesehen sein, in die der Mitnehmer E jeweils wahlweise einsetzbar ist.

In der Ausführungsform in Fig. 7 ist der Mitnehmer E eine längere Passfeder 23, die in eine längsdurchgehende Nut 24 im Exzenterabschnitt 12 eingepresst oder lösbar eingesetzt ist.

In der Ausführungsform in Fig. 8 ist der Mitnehmer E an einem Schiebering 26 angeformt, der mit dem Exzenterabschnitt 12 beispielsweise über eine Umfangsverzahnung 25 drehfest verbunden ist, und sich in Fig. 8 nach links gegen die Verrastkraft einer Kugelverrastung 27 verlagern lässt, um den Mitnehmer E, falls erforderlich, in den anderen Vorauswahlbereich 18' zum Eingriff zu bringen.

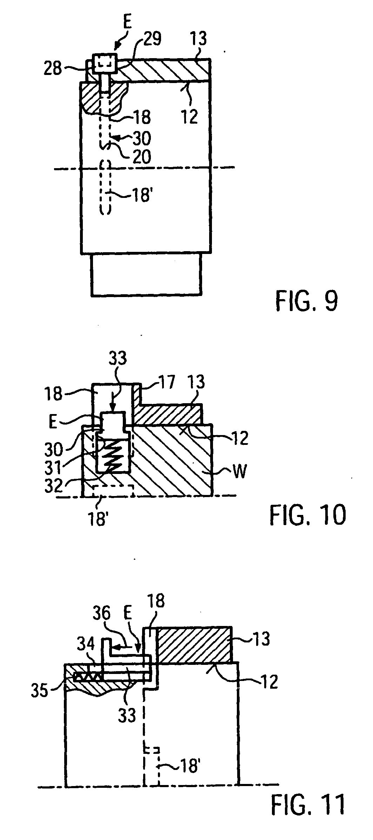

In der Ausführungsform in Fig. 9 ist der Mitnehmer E eine Schraube 28, die in einer Vertiefung 29 der Exzenterbuchse 13 lösbar festgesetzt ist und in den hier im Exzenterabschnitt 12 geformten Auswahlbereich 18 (eine in Umfangsrichtung begrenzte Umfangsnut 30 im Exzenterabschnitt 12) eingreift. Die Umfangsnut 30 bildet z.B. den Endanschlag 20. Ein weiterer Vorauswahlbereich 18', der in Umfangsrichtung kürzer oder länger ist als die Umfangsnut 30, kann beispielsweise in der gleichen Radialebene des Exzenterabschnittes 12 vorgesehen sein, um den Mitnehmer E nach Lösen der Schraube 28 dort zum Eingriff zu bringen.

In der Ausführungsform in Fig. 10 ist ähnlich wie in Fig. 5 der Vorauswahlbereich 18 als Ausnehmung im Ringflansch 17 der Exzenterbuchse 13 oder direkt in der Exzenterbuchse 13 ausgebildet. Der Mitnehmer E ist an einem Stempel 30 vorgesehen, der in einer Vertiefung 31 im Exzenterabschnitt 12 der Exzenterwelle W gegen die Kraft einer Rückstellfeder 32 durch radiale Kraft 33 verschiebbar ist. Zum Umsetzen des Mitnehmers E in einen anderen Vorauswahlbereich 18' wird der Stempel 30 gedrückt, ehe z.B. die Exzenterbuchse 13 verdreht wird, bis der Eingriff im anderen Vorauswahlbereich 18' stattfindet.

In der Ausführungsform in Fig. 11 ist schließlich der Mitnehmer E an einem Schlitten 33 angeordnet, der in einer schwalbenschwanzähnlichen Nut 34 im Exzenterabschnitt 12 axial verschiebbar ist und durch eine Rückstellfeder 35 in die gezeigte Eingriffstellung beaufschlagt wird. Durch axialen Druck (Pfeil 36) lässt sich der Mitnehmer E wahlweise aus einem Vorauswahlbereich 18 lösen und nach Verdrehen der Exzenterbuchse 13 in einen anderen Vorauswahlbereich 18' zum Eingriff bringen.

Da die jeweilige Einbaubohle mehrere Tamper T aufweisen kann, die jeweils eigene Antriebsmotoren haben, ist es zweckmäßig, die Antriebsmotoren beispielsweise parallel oder in Reihe zu schalten, z.B. Hydraulikmotoren, und eine Drehrichtungsumkehr zentral einzusteuern. Sofern Umschaltgetriebe vorgesehen sind, sollten diese parallelgeschaltet gleichzeitig schaltbar sein, um an allen Tampern die Drehrichtungsumkehr vorzunehmen, sobald es erforderlich ist, den Hub der Tamperleiste 1 innerhalb des durch den jeweiligen Vorauswahlbereich 18, 18' festgelegten Ausmaßes zu verändern.

Bei einer nicht gezeigten Alternative könnte der jeweilige Antriebsmotor M direkt an der Exzenterwelle W angreifen.

Eine Drehrichtungsumkehr kann durch den Maschinenführer oder Bedienungspersonal an einem Außensteuerstand der Einbaubohle vorgenommen werden. Besonders zweckmäßig erfolgt die Drehrichtungsumkehr mit einer automatischen Steuerung, die die jeweiligen Einbauparameter kennt und berücksichtigt, beispielsweise bei einer Änderung der Einbaugeschwindigkeit und/oder der Belagstärke eine Drehrichtungsumkehr vorschlägt, oder mit Einbaubeginn veranlasst, um den Hub der Tamperleiste 1 an die geänderten Einbaubedingungen anzupassen. Die Drehrichtungsumkehr erfolgt, vorzugsweise, während eines Einbaustops.

## Patentansprüche

1. Tamper (T) einer Einbaubohle (B) eines Straßenfertigers, mit einer von einem Antrieb drehantreibbaren, wenigstens einen Exzenterabschnitt (12) aufweisenden Exzenterwelle (W) und einer auf dem Exzenterabschnitt (12) in wenigstens einer Anschlagposition (P1, P2) drehfest abgestützten Exzenterbuchse (13), die in einem eine Tamperleiste (1) mit Hubbewegungen antreibenden Pleuel (2) drehgelagert ist, wobei der Hub der Tamperleiste (1) durch eine Drehverstellung der relativen Drehpositionierung zwischen der Exzenterbuchse (13) und dem Exzenterabschnitt (12) innerhalb eines Umfangsbereiches veränderbar ist und jede relative Drehpositionierung die Hälfte eines Tamperleistenhubs definiert, **dadurch gekennzeichnet, dass** zwischen der Exzenterwelle (W) und der Exzenterbuchse (13) wenigstens ein Mitnehmer (E) und diesem funktionell zugeordnet wenigstens ein Vorauswahlbereich (18, 18') vorgesehen sind, wobei der Vorauswahlbereich (18, 18') durch zwei Endanschläge (19, 20) für den Mitnehmer (E) begrenzt ist, wobei der Mitnehmer (E) eine in eine Längsnut (24) des Exzenterabschnittes (12) der Exzenterwelle (W) bzw. der Exzenterbuchse (13) eingesetzte Passfeder (23) ist, die in den in der Exzenterbuchse (13) bzw in der Exzenterabschnittes (12) der Exzenterwelle (W) als Ausnehmung mit zwei Endanschlägen (19, 20) geformten Vorauswahlbereich (18, 18') eingreift, und der Vorauswahlbereich (18, 18') zwei unterschiedliche Hübe der Tamperleiste (1) ergebende Anschlagpositionen (P1, P2) definiert, zwischen denen ein Umfangsabstand vorliegt, und der Mitnehmer (E) werkzeuglos durch eine Drehrichtungsumkehr (21) der Exzenterwelle (W) wahlweise in jede Mitnehmer-Anschlagposition (P1, P2) einstellbar ist, der Umfangsabstand zwischen den Endanschlägen (19, 20) größer ist als die in Umfangsrichtung gesehene Erstreckung des Mitnehmers (E), und der Vorauswahlbereich (18, 18') bzw. der Mitnehmer (E) jeweils an oder in der Exzenterwelle (W) bzw. an oder in der Exzenterbuchse (13) ausgebildet sind, dass als Antrieb der Exzenterwelle (W) ein drehrichtungsumkehrbarer Hydro- oder Elektromotor (M) oder ein Hydro- oder Elektromotor mit festgelegter Drehrichtung und einem Umschaltgetriebe vorgesehen ist, und dass die Exzenterbuchse (13) in der dann wirksamen Drehrichtung der Exzenterwelle (W) mit der Exzenterwelle gekuppelt ist.

2. Tamper nach Anspruch 1, **dadurch gekennzeichnet, dass** der Vorauswahlbereich (18, 18') in oder an der Exzenterbuchse (13) und der Mitnehmer (E) in oder an der Exzenterwelle (W) vorgesehen sind.

3. Tamper nach Anspruch 1, **dadurch gekennzeichnet, dass** der Vorauswahlbereich (18, 18') oder der Mitnehmer (E) in Umfangsrichtung und relativ zum Pleuel (2) verstellbar ist.

4. Tamper nach Anspruch 1, **dadurch gekennzeichnet, dass** der Mitnehmer (E) in Umfangsrichtung und relativ zum Pleuel (2) zwischen unterschiedlichen Umfangspositionen umsetzbar ist.

5. Tamper nach wenigstens einem der vorhergehenden Ansprüche, **dadurch gekennzeichnet, dass** in Umfangsrichtung mehrere Vorauswahlbereiche (18, 18') mit gleichen oder unterschiedlichen Umfangsabständen zwischen den jeweils zwei Mitnehmer-Anschlagpositionen (P1, P2) vorgesehen sind, und dass der Mitnehmer (E) wahlweise in jeden Vorauswahlbereich (18, 18') einbringbar ist.

6. Tamper nach wenigstens einem der Ansprüche 1 bis 4, **dadurch gekennzeichnet, dass** in Umfangsrichtung versetzt mehrere Mitnehmer (E) mit gleichen oder unterschiedlichen Umfangsabmessungen vorgesehen sind, der jeder wahlweise in den zumindest einen Vorauswahlbereich (18, 18') einbringbar ist.

7. Tamper nach wenigstens einem der vorhergehenden Ansprüche, **dadurch gekennzeichnet, dass** der Mitnehmer (E) an einem auf der Exzenterwelle (W) in Umfangsrichtung verstellbaren Träger angeordnet ist, vorzugsweise an oder in einem geschlitzten, mit wenigstens einer Spannschraube (16) drehfest auf den Exzenterabschnitt (12) oder die Exzenterwelle (W) gespannten Spannring (14), der nach Lösen der Spannschraube (16) relativ zur Exzenterwelle (W) verdrehbar, und gegebenenfalls axial verstellbar ist.

8. Tamper nach Anspruch 7, **dadurch gekennzeichnet, dass** die Exzenterbuchse (13) mehrere in Umfangsrichtung versetzte Vorauswahlbereiche (18, 18') definierende Ausnehmungen jeweils mit zwei Endanschlägen (19, 20) aufweist, und dass in den Ausnehmungen zwischen den Endanschlägen (19, 20) gleiche oder unterschiedliche Umfangsabstände vorgesehen sind.

9. Tamper nach wenigstens einem der vorhergehenden Ansprüche, **dadurch gekennzeichnet, dass** die Drehrichtungsumkehr bedienerseitig steuerbar ist und/oder in Abhängigkeit von zumindest einem Einbauparameter wie der Belagstärke und/oder der Einbaugeschwindigkeit automatisch steuerbar ist oder automatisch einem Bediener empfehlbar ist.

## Claims

1. Tamper (T) of a screed (B) of a road finisher, having an eccenter shaft (W) rotatably driven by a drive and comprising at least one eccentric section (12), and an eccenter bushing (13) supported on the eccentric section (12) in torque-proof manner at at least one stop position (P1, P2), the eccenter bushing being rotatably mounted in a connecting rod (2) driving a tamper bar (1) with stroke motions, the stroke of the tamper bar (1) being variable by a rotational adjustment of the relative rotational positioning between the eccenter bushing (13) and the eccentric section (12) within a circumferential region, and each relative rotational positioning defining half of the stroke of the tamper bar, **characterised in that** at least one tappet (E) and at least one pre-selection region (18, 18') functionally associated to the tappet (E) are provided between the eccenter shaft (W) and the eccenter bushing (13), the pre-selection region (18, 18') being limited by two end stops (19, 20) for the tappet (E), that the tappet (E) is a fitting key (23) inserted into a longitudinal groove (24) of the eccentric section (12) of the eccenter shaft (W) or the eccenter bushing (13), the fitting key (23) engaging into the pre-selection region (18, 18') which is formed in the eccenter bushing (13) or in the eccentric section (12) of the centre shaft (W), respectively, as a recess having the two end stops (19, 20), the pre-selection region (18, 18') defining stop positions (P1, P2) with a circumferential distance in-between resulting in two different strokes of the tamper bar (1), the tappet (E) being selectively adjustable without using a tool by a reversal (21) of the sense of rotation of the eccenter shaft (W), the circumferential distances between the end stops (19, 20) in circumferential direction being greater than the circumferential extension of the tappet (E), the pre-selection region (18, 18') or the tappet (E) being embodied respectively at or in the eccenter shaft (W) or at or in the eccenter bushing (13), that as the drive of the eccenter shaft (W) a hydraulic or electric motor (M) whose sense of rotation can be reversed or a hydraulic or electric motor with a fixed sense of rotation and a rotation sense changing gear is provided, and that the eccenter bushing (13) is coupled with the eccenter shaft (W) in the sense of rotation of the eccenter shaft (W) effective after the reversal (21) of the sense of rotation.

2. Tamper according to claim 1, **characterised in that** the pre-selection region (18, 18') is provided in or at the eccenter bushing (13) and the tappet (E) is provided in or at the eccenter shaft (W).

3. Tamper according to claim 1, **characterised in that** the pre-selection region (18, 18') or the tappet (E) can be adjusted in circumferential direction relative to the connecting rod (2).

4. Tamper according to claim 1, **characterised in that** the tappet (E) can be transferred in circumferential direction and relative to the connecting rod (2) between different circumferential positions.

5. Tamper according to at least one of the preceding claims, **characterised in that** in circumferential direction several pre-selection regions (18, 18') with equal or different circumferential distances between the respective two tappet stop positions (P1, P2) are provided, and that the tappet (E) can be selectively brought into each of the pre-selection regions (18, 18').

6. Tamper according to at least one of claims 1 to 4, **characterised in that** several tappets (E) with equal or different circumferential dimensions are provided offset in the circumferential direction, each of which can be selectively brought into the at least one pre-selection region (18, 18').

7. Tamper according to at least one of the preceding claims, **characterised in that** the tappet (E) is arranged at a carrier which is adjustable in circumferential direction on the eccenter shaft (W), preferably at or in a slotted straining ring (14) which is torque-proof tensioned with at least one straining screw (16) on the eccentric section (12) or the eccenter shaft (W), which straining ring (14) can be rotated relative to the eccenter shaft (W) and possibly axially adjusted after the straining screw (16) has been released.

8. Tamper according to claim 7, **characterised in that** the eccenter bushing (13) comprises several recesses each having two end stops (19, 20 and defining pre-selection regions (18, 18') which are offset to each other in circumferential direction, and that equal or different circumferential distances are provided between the end stops (19, 20) in the recesses.

9. Tamper according to at least one of the preceding claims, **characterised in that** the reversal of the sense of rotation can be controlled by an operator and/or automatically in response to at least one pavement mat laying parameter, such as the pavement mat thickness and/or road finisher's laying speed, or that it can be automatically recommended to an operator.

## Revendications

1. Dameuse (T) d'un dispositif d'application de revêtement (B) d'une finisseuse de route, avec un arbre d'excentrique (W) qui est apte à être entraîné en rotation par un entraînement et qui comporte au moins une section d'excentrique (12), et avec un coussinet d'excentrique (13) qui est supporté fixe en rotation sur la section d'excentrique (12) dans au moins une position de butée (P1, P2) et qui est monté en rotation dans une bielle (2) entraînant une barre de damage (1) avec des mouvements alternatifs, étant précisé que la course de la barre de damage (1) est apte à être modifiée grâce à un réglage rotatif de la position de rotation relative entre le coussinet d'excentrique (13) et la section d'excentrique (12) à l'intérieur d'une zone circonférentielle, et que chaque positionnement rotatif relatif définit la moitié d'une course de la barre de damage, **caractérisée en ce qu'**il est prévu entre l'arbre d'excentrique (W) et le coussinet d'excentrique (13) au moins un organe d'entraînement (E) et, associée fonctionnellement à celui-ci, au moins une zone de présélection (18, 18'), étant précisé que la zone de présélection (18, 18') est limitée par deux butées de fin de course (19, 20) pour l'organe d'entraînement (E), que l'organe d'entraînement (E) est constitué par une clavette (23) qui est placée dans une rainure longitudinale (24) de la section (12) de l'arbre d'excentrique (W) ou du coussinet d'excentrique (13) et qui pénètre dans la zone de présélection (18, 18') formée dans le coussinet d'excentrique (13) ou dans la section (12) de l'arbre d'excentrique (W) sous la forme d'un creux avec deux butées de fin de course (19, 20), et que la zone de présélection (18, 18') définit deux positions de butée (P1, P2) qui donnent différentes courses de la barre de damage (1) et entre lesquelles il y a un écartement circonférentiel, et que l'organe d'entraînement (E) est apte à être positionné sélectivement dans chaque position de butée d'organe d'entraînement (P1, P2) sans outil, grâce à une inversion de sens de rotation (21) de l'arbre d'excentrique (W), que l'écartement circonférentiel entre les butées de fin de course (19, 20) est plus grand que l'extension de l'organe d'entraînement (E) considérée dans le sens circonférentiel, et que la zone de présélection (18, 18') et l'organe d'entraînement (E) sont formés respectivement sur ou dans l'arbre d'excentrique (W) et sur ou dans le coussinet d'excentrique (13), **en ce qu'**il est prévu comme entraînement de l'arbre d'excentrique (W) un moteur hydraulique ou électrique à inversement de sens de rotation (M) ou un moteur hydraulique ou électrique à sens de rotation fixe et un inverseur de marche, et **en ce que** le coussinet d'excentrique (13) est accouplé à l'arbre d'excentrique (W) dans le sens de rotation de celui-ci qui est alors actif.

2. Dameuse selon la revendication 1, **caractérisée en ce que** la zone de présélection (18, 18') est prévue dans ou sur le coussinet d'excentrique (13), et l'organe d'entraînement (E) est prévu dans ou sur l'arbre d'excentrique (W).

3. Dameuse selon la revendication 1, **caractérisée en ce que** la zone de présélection (18, 18') ou l'organe d'entraînement (E) est réglable dans le sens circonférentiel et par rapport à la bielle (2).

4. Dameuse selon la revendication 1, **caractérisée en ce que** l'organe d'entraînement (E) est apte à être déplacé, dans le sens circonférentiel et par rapport à la bielle (2), entre des positions circonférentielles différentes.

5. Dameuse selon l'une au moins des revendications précédentes, **caractérisée en ce qu'**il est prévu dans le sens circonférentiel plusieurs zones de présélection (18, 18') avec des écartements circonférentiels égaux ou différents, entre les deux positions de butée d'organe d'entraînement (P1, P2), et **en ce que** l'organe d'entraînement (E) est apte à être amené sélectivement dans chaque zone de présélection (18, 18').

6. Dameuse selon l'une au moins des revendications 1 à 4, **caractérisée en ce qu'**il est prévu, décalés dans le sens circonférentiel, plusieurs organes d'entraînement (E) avec des dimensions circonférentielles égales ou différentes, qui sont aptes à être amenés chacun, sélectivement, dans la ou les zones de présélection (18, 18').

7. Dameuse selon l'une au moins des revendications précédentes, **caractérisée en ce que** l'organe d'entraînement (E) est disposé sur un support mobile dans le sens circonférentiel sur l'arbre d'excentrique (W), de préférence sur ou dans un collier de serrage fendu (14) qui est serré fixe en rotation, à l'aide d'au moins une vis de serrage (16), sur la section d'excentrique (12) ou l'arbre d'excentrique (W) et qui, après desserrage de la vis (16), est apte à tourner et éventuellement à être déplacé axialement par rapport à l'arbre d'excentrique (W).

8. Dameuse selon la revendication 7, **caractérisée en ce que** le coussinet d'excentrique (13) comporte plusieurs creux qui définissent des zones de présélection (18, 18') décalées dans le sens circonférentiel, avec chacun deux butées de fin de course (19, 20), et **en ce qu'**il est prévu dans les creux des écartements circonférentiels égaux ou différents entre les butées de fin de course (19, 20).

9. Dameuse selon l'une au moins des revendications précédentes, **caractérisée en ce que** l'inversion du sens de rotation est apte à être commandée côté opérateur, et/ou est apte à être commandée automatiquement en fonction d'au moins un paramètre d'application tel que l'épaisseur de revêtement et/ou la vitesse d'application, ou est apte à être conseillée automatiquement à un opérateur.
